# FASCICULE DE BREVET EUROPEEN

(11) **EP 2 148 935 B1**
(45) Date de publication et mention de la délivrance du brevet: **04.03.2015**
(21) Numéro de dépôt: 08805820.1
(22) Date de dépôt: 20.05.2008
(51) Int. Cl.: C21D 9/00, C21D 9/54, F23L 15/02, F27B 9/02, F27B 9/28, F27B 9/36, C21D 9/56, C21D 1/34, F27D 13/00

(54) **PROCEDE ET INSTALLATION DE CHAUFFAGE D'UNE BANDE METALLIQUE, NOTAMMENT EN VUE D'UN RECUIT**
VERFAHREN UND VORRICHTUNG ZUR ERWÄRMUNG EINES METALLSTREIFENS, INSBESONDERE ZU SEINER GLÜHUNG
METHOD AND EQUIPMENT FOR HEATING A METAL STRIP, IN PARTICULAR FOR ANNEALING

(30) Priorité: 30.05.2007 FR 0703823
(43) Date de publication de la demande: 03.02.2010
(73) Titulaire: GDF SUEZ, 92400 Courbevoie (FR)
(72) Inventeur: BUCHET, Philippe, F-77380 Combs La Ville (FR); RICHARD, Nicolas, F-93200 Saint-denis (FR); LHOMME, Pierre-Jacques, F-78000 Versailles (FR)
(74) Mandataire: Beauvais, Emmanuelle
(86) Numéro de dépôt international: PCT/FR2008/050874
(87) Numéro de publication internationale: WO 2008/152275

(56) Documents cités:
- JP-A- 2001 304 539
- JP-A- 2002 294 347
- US-A- 4 242 154

## Description

L'invention concerne un procédé et une installation de chauffage d'une bande métallique à une température de consigne nécessitant la présence d'une atmosphère de combustion réductrice (défaut de comburant par rapport à la quantité stoéchiométrique).

On décrit l'invention dans son application au chauffage d'une bande métallique sous forme d'un feuillard transmis à une installation de recuit, notamment pour la fabrication d'acier galvanisé.

On connaît déjà divers types d'installations de recuit de feuillards.

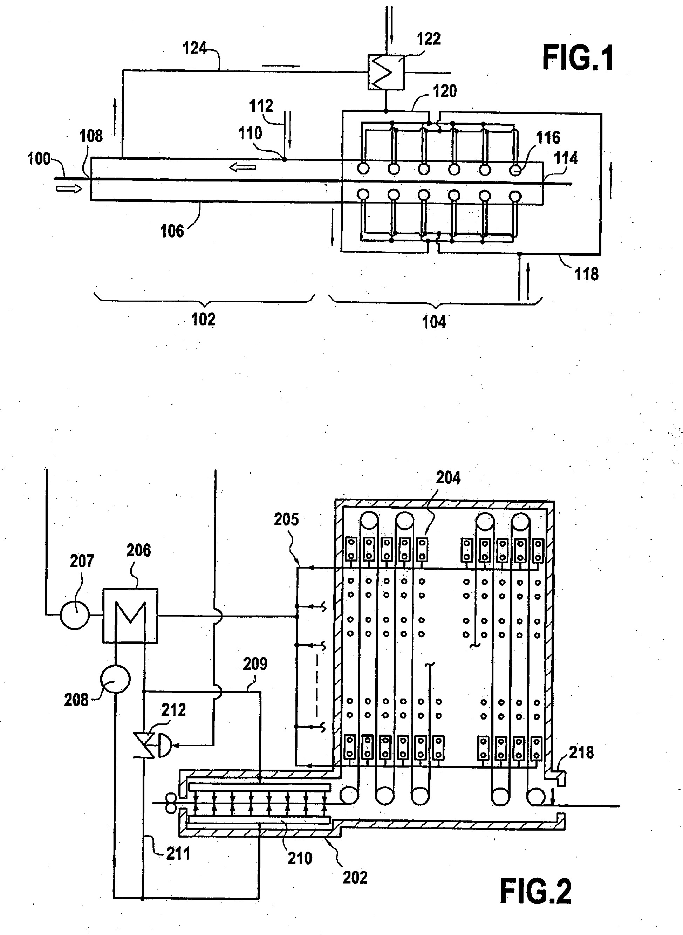

La figure 1 est un schéma d'un premier exemple d'installation connue de préchauffage d'un feuillard à une température de consigne convenant à une installation de recuit. Elle comporte un four délimitant une enceinte 102 destinée au préchauffage du feuillard 100 et une enceinte 104 de chauffage du feuillard afin que, à la sortie de l'installation, le feuillard ait une température de consigne, par exemple de 750°C.

Dans l'enceinte de préchauffage 102, comprise entre l'entrée 108 du four et un emplacement 110 d'injection d'air de post-combustion provenant d'une canalisation 112, des gaz chauds, qui ont un pouvoir réducteur nul pour que l'atmosphère du four, qui pourrait s'échapper par l'entrée 108, ne soit pas toxique (c'est-à-dire ne contienne pas de CO), s'écoulent de la partie de chauffage 104 vers la proximité de l'entrée 108, à contre-courant du feuillard 100. Les échanges de chaleur entre une surface et un courant parallèle à cette surface sont peu efficaces, à cause de la présence de couches laminaires. En conséquence, l'enceinte 102 doit avoir une grande longueur.

Dans l'enceinte de combustion 104, comprise pratiquement entre l'emplacement 110 d'injection d'air et la sortie 114 du four, des brûleurs 116 reçoivent un combustible transmis par un circuit 118 d'alimentation raccordé à chaque brûleur 116, et de l'air de combustion par un circuit 120, lui aussi raccordé à chacun des brûleurs. L'air du circuit 120 a de préférence été préchauffé dans un échangeur de chaleur 122 dans lequel circulent aussi les gaz chauds évacués par une canalisation 124 depuis la proximité de l'extrémité d'entrée 108 du four.

Dans l'enceinte de chauffage 104, les brûleurs 116 sont des brûleurs à feu nu fonctionnant en atmosphère de combustion réductrice, c'est-à-dire en présence de CO. Dans l'enceinte de chauffage 104, le feuillard passe d'une température voisine de 350 à 400 °C, près de l'emplacement 110 d'injection d'air, à une température de consigne par exemple de 750 °C à la sortie 114.

L'installation qu'on vient de décrire présente un certain nombre d'inconvénients.

D'abord, étant donné la simple circulation à contre-courant des gaz chauds et du feuillard dans l'enceinte de préchauffage 102, l'échange de chaleur entre les gaz et la bande n'est pas efficace, de sorte que la longueur de l'enceinte 102 est très importante et l'espace occupé par le four est donc important.

Ensuite, le système global utilisant les brûleurs à feu nu pour former l'atmosphère de combustion réductrice avec de l'air préchauffé par l'échangeur 122 a un rendement relativement faible, de l'ordre de 50 %, de sorte que la quantité de combustible consommé est élevée.

Enfin, les déperditions de chaleur sont importantes, du fait essentiellement de l'évacuation à l'atmosphère de gaz dont la température est encore élevée, car l'échangeur de chaleur 122 qui récupère la chaleur des gaz évacués par la canalisation 124 a une efficacité elle-même modérée.

Le document US4242154 décrit un nettoyage en continu et un système de préchauffage pour feuittard d'acier qui est recuit avant d'être revêtus ou autrement traités. Dans ce système, des étapes de réduction sont contrôlées et utilisées pour éliminer les contaminants de surface de la bande. Ce système utilise le chauffage à flamme directe dans lequel les gaz de combustion des brûleurs à flamme nue d'un four fermé s'écoulent dans et le long d'une zone tubulaire d'élongation limitée, de telle sorte que les gaz sont en contact direct avec la bande qui entre et passe à travers la zone tubulaire et le four, à contre-courant de la direction de l'écoulement des gaz.

On connaît aussi, d'après le document JP2,002-294 347, un autre exemple d'installation connue de préchauffage d'un feuillard, avant recuit de celui-ci, qui ne présente pas l'inconvénient d'occuper un très grand espace au sol.

Plus précisément, cette installation comprend une enceinte de préchauffage 202 de faible longueur, car elle comporte un dispositif 210 de préchauffage du feuillard par projection de gaz chauds en direction perpendiculaire au feuillard. Ce dispositif comporte des chambres dont la paroi tournée vers le feuillard comporte une multitude d'orifices qui projettent autant de jets de gaz chauds. Un tel dispositif 210, parfois appelé "plenum", permet un échange de chaleur efficace sur une faible longueur.

Cette enceinte de préchauffage 202 est reliée à une enceinte de chauffage 204 dans laquelle le feuillard suit un trajet en zigzag entre des tubes radiants. L'enceinte de préchauffage et l'enceinte de chauffage ont une même atmosphère protectrice. Les gaz de combustion évacués par les tubes radiants, qui sont séparés de l'atmosphère protectrice de l'enceinte 204, sont extraits par des conduites 205 vers un échangeur de chaleur 206, à l'aide d'une soufflante 207. Dans l'échangeur de chaleur 206, une atmosphère protectrice circule sous la commande d'une soufflante 208. Le circuit de circulation comprend deux canalisations montées en parallèle, une canalisation 209 alimentant le dispositif 210 de projection de gaz chauds sur le feuillard, et une autre canalisation 211 comprenant une soupape de régulation 212 qui s'ouvre plus ou moins pour moduler la quantité de gaz transmise au dispositif 210 de projection de gaz chauds.

Ainsi, un capteur de température de consigne 218, qui mesure la température du feuillard à la sortie de l'installation, permet la commande de la soupape 212 afin qu'elle régule la quantité de gaz pouvant circuler dans la canalisation 209, et donc la puissance de préchauffage du dispositif 210 de projection, afin que la température de consigne mesurée par le capteur 218 ne varie pas.

L'installation représentée sur la figure 2 ne présente pas l'inconvénient d'occuper un espace important, mais elle présente d'autres inconvénients.

D'abord, le rendement des brûleurs radiants utilisés n'est pas élevé.

Ensuite, comme la chaleur des gaz de combustion n'est récupérée que partiellement par l'échangeur de chaleur 206, l'installation a un rendement énergétique relativement réduit, qui ne dépasse une valeur de l'ordre de 50 %.

De plus, l'ensemble de l'installation, comprenant les deux enceintes et le circuit de gaz d'alimentation des chambres de projection de gaz sur le feuillard, contient une atmosphère protectrice qui soit peut être toxique, et ne remplit pas alors les conditions "d'hygiène" de la combustion, soit est inerte et coûteuse.

Enfin, comme le feuillard suit un trajet sinueux dans l'enceinte de chauffage, le coût de l'installation est élevé, et celle-ci est sujette à des pannes.

On connaît par ailleurs, notamment d'après le document JP-2001/304 539, des ensembles de chauffage à brûleurs "régénératifs". Ce terme indique que, dans une première phase, de la chaleur tirée des gaz de combustion est accumulée, et, dans une seconde phase, la chaleur accumulée est restituée à l'air de combustion. De tels ensembles comporte habituellement deux brûleurs 301a, 301b montés en tandem, l'un étant en mode de combustion dans lequel de l'air de combustion d'une canalisation 316 circule dans une masse régénérative 306 avant de participer à une combustion, et l'autre étant en mode de récupération de chaleur dans lequel les gaz de combustion du premier brûleur circulent dans sa masse régénérative 306 et la chauffent. Après un certain temps, par exemple une fraction de minute, les deux brûleurs échangent leurs modes de fonctionnement. Dans le document précité, chaque brûleur 301a, 301b comporte aussi un dispositif 308 d'alimentation en air qui, en mode de régénération, introduit de l'air de post-combustion qui se mélange aux gaz de combustion avant que ceux-ci ne circulent dans la masse régénérative 306. Une masse régénérative peut être formée d'une céramique, par exemple sous forme de billes.

Grâce à la récupération de chaleur par l'air de combustion dans la masse régénérative 306 et à l'absorption de la chaleur de post-combustion des gaz encore réducteurs avec l'air de post-combustion introduit par le dispositif 308, le rendement de l'ensemble de chauffage est accru de façon très importante par rapport à celui de simples brûleurs à feu nu travaillant en atmosphère de combustion réductrice, utilisés dans une installation du type décrit en référence à la figure 1.

On ne connaît pas actuellement d'utilisation de tels ensembles de chauffage par brûleurs régénératifs dans des installations continues de chauffage, par exemple du type utilisé pour l'alimentation d'une installation de recuit de feuillards.

L'invention met en oeuvre une combinaison de caractéristiques des installations des figures 1 et 2 et des brûleurs régénératifs de la figure 3, tout en réduisant les pertes de chaleur dues à l'utilisation d'échangeurs de chaleur. Ce sont les gaz évacués des brûleurs régénératifs qui sont projetés sur le feuillard dans la zone de préchauffage, qui participent à une augmentation sensible du rendement thermique global de l'installation, et qui permettent la régulation de température. En outre, une atmosphère protectrice qui peut être toxique, n'existe que dans l'enceinte de chauffage, et l'installation a donc de bonnes conditions "d'hygiène" de la combustion.

Plus précisément, l'invention concerne un procédé de chauffage d'une bande métallique à une température de consigne nécessitant la présence d'une atmosphère de combustion réductrice, du type qui comprend un préchauffage de la bande à une température intermédiaire qui ne nécessite pas la présence d'une atmosphère protectrice, par projection de gaz chauds vers au moins une face de la bande, et un chauffage de la bande en atmosphère de combustion réductrice de la température intermédiaire à la température de consigne, avec régulation de la température de consigne par variation de la projection des gaz chauds de préchauffage ; selon l'invention, le chauffage en atmosphère de combustion réductrice est effectué par un chauffage par brûleurs régénératifs à feu nu, exécuté dans une première phase qui comprend, dans au moins un premier brûleur, une combustion à l'aide d'air qui a absorbé de la chaleur d'une première masse d'absorption thermique, et, dans au moins un autre brûleur, une régénération par absorption de chaleur des gaz de combustion du premier brûleur au moins par une autre masse d'absorption thermique, et dans une deuxième phase dans laquelle les fonctions du premier brûleur au moins et de l'autre brûleur au moins d'une part et les fonctions de la première masse d'absorption thermique et de l'autre masse d'absorption thermique d'autre part sont inversées, la régénération par absorption de chaleur des gaz de combustion est effectuée dans une opération qui comprend, avant le passage des gaz de combustion dans la masse de régénération, le mélange de ces gaz de combustion avec une quantité supplémentaire d'air de post-combustion, le préchauffage par projection de gaz chauds comprend l'utilisation d'une partie au moins des gaz évacués du chauffage par brûleurs régénératifs, et la régulation de la température de consigne comprend le réglage de la quantité de gaz chauds pour le préchauffage par projection.

De préférence, le réglage de la quantité de gaz chauds utilisée pour le préchauffage comprend le réglage des proportions des gaz chauds transmisses d'une part à l'étape de projection et d'autre part à l'étape d'évacuation de gaz chauds.

De préférence, la quantité d'air introduite pour être mélangée aux gaz de combustion est suffisante pour que les gaz évacués aient un pouvoir réducteur nul.

De préférence, le mélange des gaz de combustion à de l'air de post-combustion introduit avant le passage des gaz de combustion dans la masse régénérative est réglé en fonction du résultat d'une mesure du pouvoir réducteur des gaz de combustion.

De préférence, le procédé comprend l'établissement d'une circulation de gaz directement de l'étape de chauffage à l'étape de préchauffage, et l'injection d'air de post-combustion entre les deux étapes.

Dans un exemple, la température intermédiaire est de l'ordre de 400 °C, la température de consigne est une température de recuit de la bande métallique, le métal de la bande métallique est l'acier, et la bande métallique est un feuillard.

L'invention concerne aussi une installation de chauffage d'une bande métallique à une température de consigne nécessitant la présence d'une atmosphère de combustion réductrice, qui comprend une enceinte de préchauffage munie d'un dispositif de projection de gaz chauds vers la bande, une enceinte de chauffage munie d'un ensemble de chauffage à feu nu en atmosphère de combustion réductrice, l'ensemble de chauffage comprenant au moins deux brûleurs régénératifs travaillant en tandem, l'un au moins des brûleurs étant en mode de combustion dans lequel de l'air de combustion circule dans une masse régénérative avant de participer à une combustion, et un autre brûleur au moins étant en mode de récupération de chaleur dans lequel les gaz de combustion du premier brûleur au moins circulent dans la masse régénérative de l'autre brûleur et la chauffent, les deux brûleurs au moins échangeant leur mode de fonctionnement, chaque brûleur comportant un dispositif d'alimentation en air en mode de régénération, afin que cet air se mélange aux gaz de combustion à l'état réducteur avant qu'ils ne circulent dans la masse régénérative, une canalisation d'évacuation des gaz de l'ensemble de chauffage, une soupape réglable à trois voies ayant une entrée reliée à la canalisation d'évacuation des gaz de l'ensemble de chauffage, une sortie reliée au dispositif de projection de gaz de l'enceinte de préchauffage, et une sortie reliée à une canalisation d'évacuation de gaz hors de l'installation, et un dispositif de régulation comprenant un capteur de température de consigne de la bande métallique et un organe de réglage de la soupape à trois voies, afin que celle-ci régule la quantité de gaz chauds transmise au dispositif de projection.

De préférence, le dispositif d'alimentation en air en mode de régénération introduit une quantité d'air sensiblement constante, au moins suffisante pour que les gaz évacués aient toujours un pouvoir réducteur nul.

De préférence, un second dispositif de régulation, qui comprend un capteur du pouvoir réducteur des gaz et un organe de réglage de la quantité d'air introduite en fonction du signal du capteur de pouvoir réducteur, régule la quantité d'air introduite par le dispositif d'alimentation en air.

De préférence, les enceintes de préchauffage et de chauffage sont adjacentes et colinéaires.

De préférence, l'installation comporte en outre un dispositif d'introduction d'air de post-combustion entre les enceintes de préchauffage et de chauffage, la quantité d'air introduite par ce dispositif étant suffisante pour que l'enceinte de préchauffage contienne des gaz de pouvoir réducteur nul.

Par rapport à l'installation de la figure 1, l'invention présente l'avantage de permettre la réalisation d'une installation de longueur réduite, grâce à la réduction considérable de la zone de préchauffage.

Par rapport à l'installation de la figure 2, l'invention présente l'avantage d'une plus grande simplicité, dans la mesure où le feuillard suit un trajet linéaire.

Par rapport à toutes les installations décrites, l'invention permet une réduction considérable des pertes énergétiques et une augmentation très significative du rendement énergétique, obtenues essentiellement par utilisation d'ensembles à brûleurs régénératifs et à l'absence d'échangeur de chaleur.

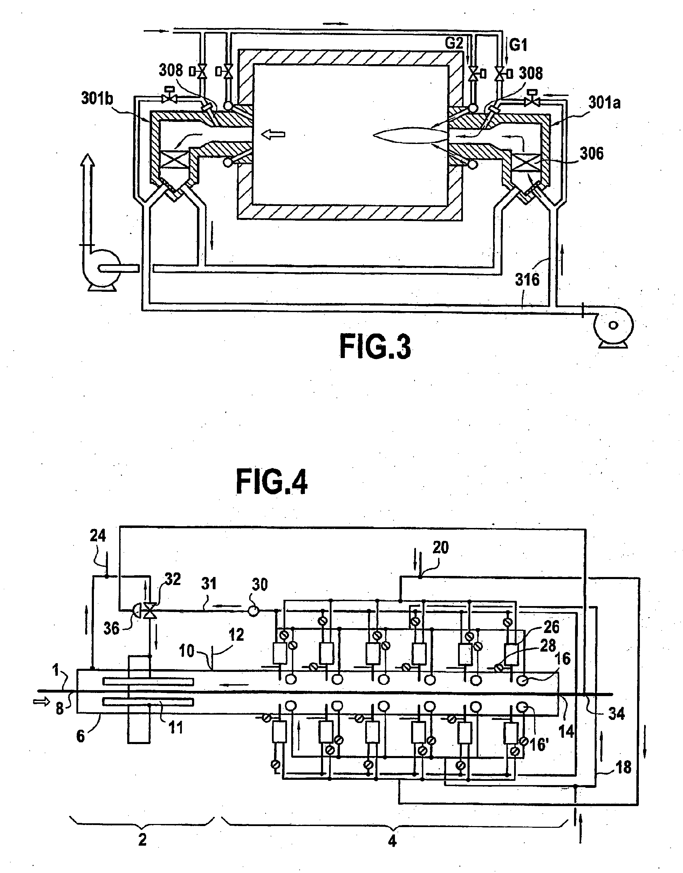

Ainsi, si une installation telle que représentée sur la figure 1 présente un rendement énergétique global de l'ordre de 50 %, une installation analogue du type représenté sur la figure 4 dépasse largement 60 %.

Tous ces avantages sont obtenus par la combinaison de l'utilisation d'un trajet rectiligne, de l'utilisation d'un dispositif de préchauffage par projection, de l'utilisation de brûleurs à feu nu de type régénératif, et de l'utilisation d'une régulation de la température de consigne par le dispositif de préchauffage. Plus précisément, les brûleurs régénératifs sont mis en oeuvre de façon à obtenir une température des gaz de combustion évacués beaucoup plus élevée que dans l'état de la technique. En effet, dans toutes les applications connues, les brûleurs régénératifs, qu'ils fonctionnent en atmosphère oxydante ou réductrice, produisent des gaz de combustion à des températures de l'ordre de 150°C. En partie pour cette raison, tous les brûleurs régénératifs connus, y compris celui du type décrit dans le document JP-2001/304 539, sont mis en oeuvre avec une évacuation dans l'atmosphère des gaz de combustion. Dans le cadre de l'invention, les brûleurs fonctionnent au contraire de manière à obtenir une température des gaz chaud permettant leur utilisation directe par projection dans l'enceinte de préchauffage, avantageusement de l'ordre de 400°C.

D'autres caractéristiques et avantages de l'invention seront mieux compris à la lecture de la description qui va suivre d'un exemple de réalisation, les figures étant telles que, les figures 1 à 3 ayant déjà été décrites, la figure 4 est un schéma d'une installation selon l'invention, représentée sous forme schématique.

L'installation de la figure 4 comprend un certain nombre de parties analogues à celles de la figure 1.

Ainsi, un feuillard 1 pénètre dans un four 6 qui comprend une première enceinte 2 travaillant en milieu oxydant, ou au moins de pouvoir réducteur nul, et une seconde enceinte 4 ayant une atmosphère de combustion réductrice. L'entrée 8 du feuillard ne peut laisser passer que l'atmosphère de la première enceinte 2, c'est-à-dire une atmosphère qui n'est pas toxique et qui ne contient pas de CO, grâce à l'introduction d'air de post-combustion par une entrée 10, à l'aide d'une canalisation 12. Le feuillard quitte le four par une sortie 14 à une température de consigne, après être passé en face de brûleurs 16. Ces brûleurs sont alimentés en combustible par un circuit 18 et en air par un circuit 20. Les gaz finalement évacués à proximité de l'entrée 8 quittent l'installation par une canalisation 24 qui rejoint par exemple une cheminée.

Les autres caractéristiques de l'installation de la figure 4 sont différentes de celles de la figure 1.

D'abord, l'enceinte de préchauffage 2 comporte un dispositif 11 de projection de gaz chauds de préchauffage, alimenté en gaz chauds par l'enceinte de chauffage 4, comme décrit dans la suite.

Chaque brûleur à feu nu 16 est associé à une masse régénérative 26, analogue à la masse régénérative 306 décrite en référence à la figure 3. Une entrée 28 d'air de post-combustion est analogue à l'entrée 308 décrite en référence à la figure 3. Deux brûleurs 16 et 16' disposées l'un en face de l'autre fonctionnent en tandem, de la manière décrite en référence à la figure 3.

Dans un premier mode de réalisation, la quantité d'air de post-combustion introduite par l'entrée 28 en amont de la masse régénératrice 26 peut être suffisante pour que les gaz évacués par le brûleur présentent toujours un pouvoir réducteur nul. Dans ce cas, les brûleurs fonctionnent avec un excès d'air de post-combustion.

Dans une variante, un capteur de pouvoir réducteur (non représenté) est incorporé aux brûleurs, en amont ou en aval de la masse régénérative, afin qu'il permette une régulation de la quantité d'air de post-combustion introduite dans chaque brûleur. De cette manière, le rendement thermique est optimisé et la consommation d'énergie par les brûleurs est réduite au minimum.

Malgré la réaction de post-combustion qui dégage une quantité supplémentaire de chaleur, notamment par combustion de CO dans l'atmosphère de combustion réductrice, les gaz évacués par les masses régénératives 26 ont une température suffisamment basse pour pouvoir être transmis par une soufflante 30 d'une canalisation 31 d'évacuation des gaz de combustion à une soupape à trois voies 32 de régulation et au dispositif 11 de projection de gaz chauds, à une température qui ne nécessite pas la présence d'une atmosphère de combustion réductrice pour le feuillard. La présence d'une soufflante, dans tous les cas nécessaire à l'extraction des gaz de combustion, permet en outre de profiter de la pression dynamique qu'acquièrent ces gaz pour accroître l'efficacité thermique du préchauffage par projection. Cela participe encore à l'augmentation du rendement du système objet de l'invention.

On a aussi représenté un capteur de température 34 destiné à déterminer la température de consigne du feuillard 1 à la sortie du four 6. Un circuit de régulation (non représenté), en fonction de la température déterminée par le capteur 34, commande un dispositif 36 de manoeuvre qui règle la soupape à trois voies 32. De cette manière, la quantité des gaz évacués par les brûleurs qui est utilisée pour le préchauffage dans le dispositif 11 peut être régulée avec une grande vitesse de réaction, nécessaire à cause de la grande vitesse du feuillard dans le four.

L'enceinte de chauffage 4 de l'installation de la figure 4 a une longueur analogue à celle de l'enceinte de chauffage 104 de l'installation de la figure 1. Par contre, l'enceinte de préchauffage 2 de l'installation de la figure 4 est beaucoup plus courte que l'enceinte 102 de l'installation de la figure 1.

L'installation de la figure 4 permet un passage linéaire du feuillard 1 qui est simplement supporté localement par quelques rouleaux à l'intérieur du four, contrairement à l'installation complexe de circulation en zigzag du feuillard dans l'installation représentée sur la figure 2. Grâce à la présence de deux atmosphères distinctes, l'une qui peut être oxydante et qui n'est pas réductrice au sens de la combustion, dans l'encéinte de préchauffage, et l'autre qui est réductrice au sens de la combustion, dans l'enceinte de chauffage, les gaz de combustion peuvent être utilisés directement pour le préchauffage, contrairement au cas de l'installation de la figure 2 qui nécessite un échangeur de chaleur entre les gaz de combustion et les gaz utilisés pour le préchauffage du feuillard.

Un autre avantage de l'invention est que, grâce au préchauffage à une température élevée et à l'augmentation du rendement thermique des masses régénératives des brûleurs qui peut atteindre 80 %, les fumées évacuées peuvent contenir des quantités réduites d'oxydes d'azote NOx, par exemple inférieures à 200 mg/m³ dans les conditions normales pour 3 % d'oxygène dans les fumées, si ce système de préchauffage de l'air de combustion est associé à une technique à haute performance en matière d'émission de polluants (par exemple oxydation sans flamme). En outre, grâce à l'augmentation du rendement thermique de ces brûleurs performants, il est possible de chauffer plus rapidement le feuillard et donc d'obtenir une augmentation de productivité, avec réduction de la consommation de combustible et de l'émission d'oxydes d'azote.

Bien qu'on ait décrit l'invention dans son application au chauffage d'une bande métallique, ce chauffage peut constituer un véritable traitement thermique, et non une simple opération antérieure à un traitement thermique, tel qu'un recuit.

L'invention présente donc de grands avantages, non seulement au point de vue de la rentabilité et du coût, mais aussi au point de vue de la préservation des ressources fossiles et de la sauvegarde de l'environnement, grâce à la réduction du combustible consommé et des émissions, et à l'augmentation de la sécurité.

## Revendications

1. Procédé de chauffage d'une bande métallique à une température de consigne nécessitant la présence d'une atmosphère de combustion réductrice, du type qui comprend
un préchauffage de la bande à une température intermédiaire qui ne nécessite pas la présence d'une atmosphère protectrice, par projection de gaz chauds vers au moins une face de la bande, et
un chauffage de la bande en atmosphère de combustion réductrice de la température intermédiaire à la température de consigne,
avec régulation de la température de consigne par variation de la projection des gaz chauds de préchauffage,
**caractérisé en ce que**
le chauffage en atmosphère de combustion réductrice est effectué par un chauffage par brûleurs régénératifs à feu nu, exécuté dans une première phase qui comprend, dans au moins un premier brûleur (16, 16'), une combustion à l'aide d'air qui a absorbé de la chaleur d'une première masse d'absorption thermique (26), et, dans au moins un autre brûleur (16, 16'), une régénération par absorption de chaleur des gaz de combustion du premier brûleur au moins par une autre masse d'absorption thermique (26), et dans une deuxième phase dans laquelle les fonctions du premier brûleur au moins (16, 16') et de l'autre brûleur au moins (16, 16') d'une part et les fonctions de la première masse d'absorption thermique (26) et de l'autre masse d'absorption thermique (26) d'autre part sont inversées,
la régénération par absorption de chaleur des gaz de combustion est effectuée dans une opération qui comprend, avant le passage des gaz de combustion dans la masse de régénération (26), le mélange de ces gaz de combustion avec une quantité supplémentaire d'air de post-combustion,
le préchauffage par projection de gaz chauds comprend l'utilisation d'une partie au moins des gaz évacués du chauffage par brûleurs régénératifs, et
la régulation de la température de consigne comprend le réglage de la quantité de gaz chauds pour le préchauffage par projection.

2. Procédé selon la revendication 1, **caractérisé en ce que** le réglage de la quantité de gaz chauds utilisée pour le préchauffage comprend le réglage des proportions des gaz chauds transmises d'une part à l'étape de projection et d'autre part à l'étape d'évacuation de gaz chauds.

3. Procédé selon l'une des revendications 1 et 2, **caractérisé en ce que** la quantité d'air introduite pour être mélangée aux gaz de combustion est suffisante pour que les gaz évacués aient un pouvoir réducteur nul.

4. Procédé selon l'une des revendications 1 et 2, **caractérisé en ce que** le mélange des gaz de combustion à de l'air de post-combustion introduit avant le passage des gaz de combustion dans la masse régénérative (26) est réglé en fonction du résultat d'une mesure du pouvoir réducteur des gaz de combustion.

5. Procédé selon l'une des revendications précédentes, **caractérisé en ce qu'**il comprend l'établissement d'une circulation de gaz directement de l'étape de chauffage à l'étape de préchauffage, et l'injection d'air de post-combustion entre les deux étapes.

6. Installation de chauffage d'une bande métallique à une température de consigne nécessitant la présence d'une atmosphère de combustion réductrice, **caractérisée en ce qu'**elle comprend
une enceinte (2) de préchauffage munie d'un dispositif (11) de projection de gaz chauds vers la bande (1),
une enceinte (4) de chauffage munie d'un ensemble de chauffage à feu nu en atmosphère de combustion réductrice, l'ensemble de chauffage comprenant au moins deux brûleurs régénératifs (16, 16') travaillant en tandem, l'un au moins des brûleurs (16, 16') étant en mode de combustion dans lequel de l'air de combustion circule dans une masse régénérative (26) avant de participer à une combustion, et un autre brûleur au moins (16, 16') étant en mode de récupération de chaleur dans lequel les gaz de combustion du premier brûleur au moins (16, 16') circulent dans la masse régénérative (26) de l'autre brûleur (16, 16') et la chauffent, les deux brûleurs au moins (16, 16') échangeant leurs modes de fonctionnement, chaque brûleur (16, 16') comportant un dispositif d'alimentation en air en mode de régénération, afin que cet air se mélange aux gaz de combustion à l'état réducteur avant qu'ils ne circulent dans la masse régénérative (26),
une canalisation (31) d'évacuation des gaz de l'enceinte de chauffage,
une soupape réglable à trois voies (32) ayant une entrée reliée à la canalisation (31) d'évacuation des gaz de l'ensemble de chauffage, une sortie reliée au dispositif (11) de projection de gaz de l'enceinte de préchauffage, et une sortie reliée à une canalisation (24) d'évacuation de gaz hors de l'installation, et
un dispositif de régulation comprenant un capteur (34) de température de consigne de la bande métallique et un organe (36) de réglage de la soupape à trois voies (32), afin que celle-ci régule la quantité de gaz chauds transmise au dispositif (11) de projection.

7. Installation selon la revendication 6, **caractérisée en ce que** le dispositif d'alimentation en air en mode de régénération introduit une quantité d'air sensiblement constante, au moins suffisante pour que les gaz évacués aient toujours un pouvoir réducteur nul.

8. Installation selon la revendication 6, **caractérisée en ce qu'**elle comprend un second dispositif de régulation, qui comporte un capteur du pouvoir réducteur des gaz et un organe de réglage de la quantité d'air introduite en fonction du signal du capteur de pouvoir réducteur, destiné à réguler la quantité d'air introduite par le dispositif d'alimentation en air.

9. Installation selon l'une quelconque des revendications 6 à 8, **caractérisée en ce que** les enceintes (2, 4) de préchauffage et de chauffage sont adjacentes et colinéaires.

10. Installation selon l'une quelconque des revendications 6 à 9, **caractérisée en ce qu'**elle comporte en outre un dispositif (10) d'introduction d'air de post-combustion entre les enceintes (2, 4) de préchauffage et de chauffage, la quantité d'air introduite par ce dispositif étant suffisante pour que l'enceinte (2) de préchauffage contienne des gaz de pouvoir réducteur nul.

## Patentansprüche

1. Verfahren zur Erwärmung eines Metallstreifens auf eine Solltemperatur, das das Vorhandensein einer reduzierenden Verbrennungsatmosphäre erfordert, umfassend:
ein Vorwärmen des Streifens auf eine Zwischentemperatur, das nicht das Vorhandensein einer Schutzatomsphäre erfordert, durch Projektion von heißen Gasen auf mindestens eine Seite des Streifens, und
ein Erwärmen des Streifens in einer Verbrennungsatmosphäre, die die Zwischentemperatur auf die Solltemperatur reduziert,
mit Regulierung der Solltemperatur durch Variation der Projektion der heißen Vorwärmgase,
**dadurch gekennzeichnet, dass**
das Erwärmen in einer reduzierenden Verbrennungsatmosphäre durch ein Erwärmen durch Regenerationsbrenner bei offenem Feuer erfolgt, das in einer ersten Phase, umfassend in mindestens einem ersten Brenner (16, 16') eine Verbrennung mit Hilfe von Luft, die Wärme aus einer ersten Wärmeabsorptionsmasse (26) absorbiert hat, und in mindestens einem weiteren Brenner (16, 16') eine Regeration durch Absorption von Wärme aus den Verbrennungsgasen des ersten Brenners durch mindestens eine weitere Wärmeabsorptionsmasse (26), und in einer zweiten Phase durchgeführt wird, in der die Funktionen mindestens des ersten Brenners (16, 16') und mindestens des anderen Brenners (16, 16') einerseits und die Funktionen der ersten Wärmeabsorptionsmasse (26) und der anderen Wärmeabsorptionsmasse (26) andererseits umgekehrt werden,
die Regeneration durch Wärmeabsorption aus den Verbrennungsgasen in einem Vorgang erfolgt, umfassend vor dem Strömen der Verbrennungsgase in die Regenerationsmasse (26) das Mischen dieser Verbrennungsgase mit einer zusätzlichen Menge Luft aus der Nachverbrennung,
das Vorwärmen durch Projektion der heißen Gase die Verwendung mindestens eines Teils der aus dem Erwärmen durch Regenerationsbrenner abgeleiteten Gase umfasst,
und
die Regulierung der Solltemperatur die Regelung der Menge an heißen Gasen für das Vorwärmen durch Projektion umfasst.

2. Verfahren nach Anspruch 1, **dadurch gekennzeichnet, dass** die Regelung der Menge an heißen Gasen, die für das Vorwärmen verwendet wird, die Regelung der Anteile der heißen Gase, die einerseits in dem Schritt der Projektion und andererseits in dem Schritt der Ableitung der heißen Gase übertragen werden, umfasst.

3. Verfahren nach einem der Ansprüche 1 und 2, **dadurch gekennzeichnet, dass** die eingeleitete Luftmenge, um mit den Verbrennungsgasen gemischt zu werden, ausreichend ist, dass die abgeleiteten Gase eine Reduktionsfähigkeit gleich Null haben.

4. Verfahren nach einem der Ansprüche 1 und 2, **dadurch gekennzeichnet, dass** das Mischen der Verbrennungsgase mit Luft aus der Nachverbrennung, die vor dem Strömen der Verbrennungsgase in die Regenerationsmasse (26) eingeleitet wird, in Abhängigkeit vom Ergebnis einer Messung der Reduktionsfähigkeit der Verbrennungsgase geregelt wird.

5. Verfahren nach einem der vorhergehenden Ansprüche, **dadurch gekennzeichnet, dass** es die Herstellung einer Gaszirkulation direkt vom Schritt des Erwärmens zum Schritt des Vorwärmens und das Einspritzen von Luft aus der Nachverbrennung zwischen den beiden Schritten umfasst.

6. Anlage zur Erwärmung eines Metallstreifens auf eine Solltemperatur, die das Vorhandensein einer reduzierenden Verbrennungsatmosphäre erfordert, **dadurch gekennzeichnet, dass** sie Folgendes umfasst:
einen Raum (2) zum Vorwärmen, der mit einer Vorrichtung (11) zur Projektion von heißen Gasen auf den Streifen (1) versehen ist,
einen Raum (4) zum Erwärmen, der mit einer Einheit zum Erwärmen bei offenem Feuer in einer reduzierenden Verbrennungsatmosphäre versehen ist, wobei die Erwärmungseinheit mindestens zwei Regenerationsbrenner (16, 16') umfasst, die im Tandem arbeiten, wobei mindestens einer der Brenner (16, 16') im Verbrennungsmodus ist, in dem Verbrennungsluft in einer Regenerationsmasse (26) zirkuliert, bevor sie an einer Verbrennung beteiligt ist, und wobei mindestens ein weiterer Brenner (16, 16') im Wärmewiedergewinnungsmodus ist, in dem die Verbrennungsgase des mindestens ersten Brenners (16, 16') in der Regenerationsmasse (26) des anderen Brenners (16, 16') zirkulieren und sie erwärmen, wobei die mindestens zwei Brenner (16, 16') ihre Betriebsmodi austauschen, wobei jeder Brenner (16, 16') eine Luftversorgungsvorrichtung im Regenerationsmodus umfasst, damit sich diese Luft mit den Verbrennungsgasen im Reduktionszustand mischt,
bevor sie in der Regenerationsmasse (26) zirkulieren,
einen Kanal (31) zur Ableitung der Gase aus dem Erwärmungsraum,
ein einstellbares Dreiwegeventil (32) mit einem Eingang, der mit dem Kanal (31) zur Ableitung der Gase aus der Erwärmungseinheit verbunden ist, einem Ausgang, der mit der Vorrichtung (11) zur Projektion von Gasen aus dem Vorwärmraum verbunden ist, und einem Ausgang, der mit einem Kanal (24) zur Ableitung von Gasen aus der Anlage verbunden ist, und
eine Regulierungsvorrichtung, umfassend einen Solltemperaturfühler (34) des metallischen Streifens und ein Element (36) zur Regelung des Dreiwegeventils (32), damit dieses die Menge von heißen Gasen, die auf die Projektionsvorrichtung (11) übertragen wird, reguliert.

7. Anlage nach Anspruch 6, **dadurch gekennzeichnet, dass** die Luftversorgungsvorrichtung im Regenerationsmodus eine im Wesentlichen konstante Luftmenge einleitet, die zumindest ausreicht, damit die abgeleiteten Gase immer eine Reduktionsfähigkeit gleich Null haben.

8. Anlage nach Anspruch 6, **dadurch gekennzeichnet, dass** sie eine zweite Regulierungsvorrichtung umfasst, die einen Fühler für die Reduktionsfähigkeit der Gase und ein Element zum Regeln der eingeleiteten Luftmenge in Abhängigkeit von dem Signal des Fühlers der Reduktionsfähigkeit umfasst, das dazu bestimmt ist, die von der Luftversorgungsvorrichtung eingeleitete Luftmenge zu regulieren.

9. Anlage nach einem der Ansprüche 6 bis 8, **dadurch gekennzeichnet, dass** die Vorwärm- und Erwärmungsräume (2, 4) aneinandergrenzend und kolinear sind.

10. Anlage nach einem der Ansprüche 6 bis 9, **dadurch gekennzeichnet, dass** sie ferner eine Vorrichtung (10) zur Einleitung von Luft aus der Nachverbrennung zwischen die Vorwärm- und Erwärmungsräume (2, 4) umfasst, wobei die von dieser Vorrichtung eingeleitete Luftmenge ausreicht, damit der Vorwärmraum (2) Gase mit einer Reduktionsfähigkeit gleich Null enthält.

## Claims

1. Method for heating a metal band to a temperature set point requiring the presence of a reducing combustion atmosphere, of the type that comprises
preheating the band to an intermediate temperature that does not require the presence of a protective atmosphere, by projecting hot gases towards at least one surface of the band, and
heating the band in a reducing combustion atmosphere from the intermediate temperature to the temperature set point,
with the temperature set point regulated by varying the projection of the preheating hot gases;
**characterized in that**
the heating in a reducing combustion atmosphere is carried out by means of direct-fired regenerative burners in a first phase that comprises, in at least one first burner (16, 16'), combustion with the help of air that has absorbed heat from a first thermal absorption mass (26), and, in at least one other burner (16, 16'), regeneration by absorption of heat from the combustion gases of the first burner by at least one other thermal absorption mass (26), and in a second phase in which the functions of the at least first burner (16, 16') and of the at least other burner (16, 16') on the one hand and the functions of the first thermal absorption mass (26) and of the other thermal absorption mass (26) on the other hand are reversed,
the regeneration by absorption of heat from the combustion gases is carried out in an operation that comprises, before the combustion gases pass through the regenerative mass (26), mixing these combustion gases with an additional quantity of post-combustion air,
the preheating by projection of hot gases comprises the use of at least a part of the gases evacuated from the heating by regenerative burners, and
the regulation of the temperature set point comprises adjusting the quantity of hot gases for the preheating by projection.

2. Method according to claim 1, **characterized in that** the regulation the quantity of hot gases used for the preheating comprises adjusting the proportions of hot gases transmitted firstly to the projection step and secondly to the hot gas evacuation step.

3. Method according to one of claims 1 and 2, **characterized in that** the quantity of air introduced for mixing with the combustion gases is sufficient for the evacuated gases to have a reducing power of zero.

4. Method according to one of claims 1 and 2, **characterized in that** the mixing of the combustion gases with the post-combustion air introduced before the combustion gases pass through the regenerative mass (26) is adjusted according to the result of a measurement of the reducing power of the combustion gases.

5. Method according to one of the preceding claims, **characterized in that** it comprises establishing a circulation of gases directly from the heating step to the preheating step, and the injection of post-combustion air between the two steps.

6. Installation for heating a metal band to a temperature set point requiring the presence of a reducing combustion atmosphere, **characterized in that** it comprises
a preheating chamber (2) equipped with a device (11) for projecting hot gases towards the band (1),
a heating chamber (4) equipped with a unit for direct-fired heating in a reducing combustion atmosphere, the heating unit comprising at least two regenerative burners (16, 16') working in tandem, at least one of the burners (16, 16') being in a combustion mode in which the combustion air circulates through a regenerative mass (26) before participating in combustion, and at least one other burner (16, 16') being in a heat recuperation mode in which the combustion gases from the at least first burner (16, 16') circulate through the regenerative mass (26) of the other burner (16, 16') and heat it, the at least two burners (16, 16') exchanging their operating modes, each burner (16, 16') comprising a device for supplying air in regeneration mode, so that this air is mixed with the combustion gases in the reducing state before they circulate through the regenerative mass (26),
a duct (31) for evacuating the gases from the heating chamber,
an adjustable three-way valve (32) with an inlet connected to the duct (31) for evacuating the gases from the heating unit, an outlet connected to the gas projection device (11) of the preheating chamber, and an outlet connected to a duct (24) for evacuating the gases outside the installation, and
a regulating device comprising a metal band temperature set point sensor (34), and a unit (36) for regulating the three-way valve (32), so that the valve adjusts the quantity of hot gases transmitted to the projection device (11).

7. Installation according to claim 6, **characterized in that** the device for supplying air in regeneration mode introduces a substantially constant quantity of air, at least sufficient for the evacuated gases to always have a reducing power of zero.

8. Installation according to claim 6, **characterized in that** it comprises a second regulating device, which comprises a sensor for the reducing power of the gases and a unit for regulating the quantity of air introduced according to the signal from the reducing power sensor, designed to regulate the quantity of air introduced by the air supply device.

9. Installation according to any one of claims 6 to 8, **characterized in that** the preheating and heating chambers (2, 4) are adjacent and collinear.

10. Installation according to any one of claims 6 to 9, **characterized in that** it comprises in addition a device (10) for introducing post-combustion air between the preheating and heating chambers (2, 4), the quantity of air introduced by this device being sufficient so that the preheating chamber (2) contains gases having a reducing power of zero.
